# FASCICULE DE BREVET EUROPEEN

(11) **EP 0 351 278 B1**
(45) Date de publication et mention de la délivrance du brevet: **28.04.1993**
(21) Numéro de dépôt: 89401862.1
(22) Date de dépôt: 29.06.1989
(51) Int. Cl.: C03B 23/03, C03B 35/14, C03B 23/035

(54) **Procédé et dispositif de bombage des feuilles de verre**
Verfahren und Vorrichtung zum Biegen von Glasscheiben
Method and apparatus for bending glass sheets

(30) Priorité: 05.07.1988 DE 3822639
(43) Date de publication de la demande: 17.01.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eupen (BE); Radermacher, Herbert, B-4730 Raeren (BE); Kuster, Hans-Werner, D-5100 Aachen (DE)
(74) Mandataire: Menes, Catherine

(56) Documents cités:
- EP-A- 0 053 551
- FR-A- 2 613 710
- US-A- 4 743 285

## Description

L'invention a pour objet un procédé et un dispositif de bombage de feuilles de verre, et plus précisément de bombage au moyen de formes de bombage disposées au dessus du plan de transport horizontal des feuilles de verre. Elle s'applique notamment à la production de vitrages automobiles bombés et éventuellement trempés.

Parmi les différents procédés connus de formage de feuilles de verre, les procédés de bombage par pressage présentent l'avantage d'être tout spécialement efficaces car ils permettent la réalisation des formes de vitrages les plus difficiles, mais ils sont des plus difficiles à mettre en oeuvre dans une installation dite horizontale, c'est à dire dans laquelle les feuilles de verre sont échauffées dans un four tunnel qu'elles traversent convoyées à plat sur un lit de rouleaux moteurs. En effet, le dispositif utilisé pour transporter les feuilles de verre entre les deux presses interfère lors du passage et/ou induit des déformations conduisant à des défauts optiques.

De FR-A-1398897, il est connu un procédé de bombage selon lequel les feuilles de verre sont réchauffées à plat dans un four qu'elles traversent sur un convoyeur à rouleaux qui se termine à la sortie du four et est prolongé par un convoyeur à coussin d'air servant à disposer les feuilles de verre entre les deux presses de l'ensemble de bombage. Le convoyeur à coussin d'air est doublé par un hamac souple. Une fois le verre correctement positionné, le convoyeur à coussin d'air est retiré de sorte que la feuille de verre repose alors sur le hamac et on procède au pressage alors que le hamac reste en place. L'inconvénient d'une telle réalisation est que le hamac est fortement sollicité mécaniquement et doit à chaque cycle de bombage être tendu puis s'adapter parfaitement à la forme de pressage. La durée de vie d'un tel hamac est par conséquent très brève. De plus, le hamac possède toujours une certaine raideur qui interdit les formes les plus complexes, par exemple les courbures locales négatives, c'est à dire les formes de vitrage comportant des centres de courbure répartis des deux côtés opposés du vitrage.

Il est par ailleurs connu de US-A-3265484 et US-A-4318728 des installations de bombage dans lesquelles le hamac sert directement au transfert des feuilles de verre et est utilisé en tant que convoyeur souple. Toutefois le réglage de la tension du hamac est encore plus difficile que précédemment.

Il est enfin connu de EP-A-228597 une installation de bombage comportant un ensemble de pressage avec une forme de bombage supérieure pleine et convexe, munie d'un dispositif d'aspiration, et une forme de bombage inférieure complémentaire. Les feuilles de verre sont transférées du four à l'ensemble de bombage par un dispositif constitué par une plaque aspirante mobile horizontalement. Cette plaque prend en charge une feuille, l'amène à l'ensemble de pressage et repart en direction du four. A la fin du pressage, la feuille de verre est maintenue par effet de succion contre la forme supérieure aspirante pendant toute la durée nécessaire à l'écartement des deux formes et à l'introduction sous la forme supérieure d'un cadre annulaire dont le pourtour correspond à la forme conférée à la feuille de verre. Cette dernière est déposée par la forme supérieure aspirante sur le cadre qui la conduit à un ensemble de refroidissement par soufflage de trempe.

De fait, l'installation connue de EP-A-228597 emploie toujours un hamac servant au support uniforme des feuilles de verre et à leur positionnement par rapport aux outils de bombage. Le hamac est tendu au dessus de la forme de bombage inférieure et est relâché lors de l'opération de pressage, de sorte que de ce point de vue, le procédé est analogue à FR-A-1398897. Par ailleurs, la plaque aspirante servant au transfert du four à l'ensemble de pressage doit, pour fonctionner, être équipée d'un ventilateur qui produit la dépression nécessaire à l'aspiration et de connexions électriques pour la commande du moteur du ventilateur. Tous ces équipements doivent être en mesure de supporter des températures très élevées car la plaque aspirante pénètre par le bout le plus chaud du four, ce qui oblige à opter pour des matériaux et des techniques de construction d'un coût élevé.

L'invention a pour objet un procédé de bombage des feuilles de verre selon lequel le transfert des feuilles de verre du four à l'ensemble de bombage est réalisé d'une manière très simple, sans recours à un dispositif aspirant mobile, ne gêne pas lors du processus de formage notamment par pressage, et n'entraine pas de défauts optiques dus à un soutien non uniforme du verre comme il est parfois observé avec des rouleaux.

Selon l'invention, la feuille de verre est chargée à plat à l'extrémité d'un convoyeur traversant un four tunnel, ressort par l'autre extrémité du convoyeur après avoir atteint sa température de bombage, est convoyée par un premier dispositif de transfert jusqu'à un ensemble de bombage qui comprend au moins une forme de bombage supérieure, est aspirée par la forme supérieure de bombage qui est alors soulevée, et bombée suivant la forme souhaitée par l'ensemble de bombage puis est acheminée par un second dispositif de transfert vers une station de refroidissement notamment de trempe thermique, ledit transfert du four vers l'ensemble de bombage étant obtenu par le déplacement réversible, parallèlement à la direction générale de déplacement de la feuille de verre, de l'extrémité avant d'une bande transporteuse flexible dont l'extrémité arrière est sous le plan de transport de la feuille de verre, la position initiale de l'extrémité avant de la bande flexible étant située entre l'extrémité avale du convoyeur et l'ensemble de bombage.

Le procédé selon l'invention permet un parfait soutien de la feuille de verre dans la dernière phase de son trajet vers l'ensemble de bombage, lorsque le verre est le plus chaud et donc le plus sujet à des déformations, phase qui s'effectue d'une vitesse relativement lente car il est nécessaire d'assurer précisément la position d'arrêt sous la forme de bombage supérieure, ceci bien sûr pour garantir une bonne conformité du galbe. De plus, il est plus facile de limiter les glissements de la feuille de verre sur la bande flexible que sur des rouleaux.

La forme supérieure de bombage est de préférence convexe.

Le procédé selon l'oeuvre autorise de nombreuses variantes de réalisation du formage des feuilles de verre que l'on peut classer par exemple en fonction de la longueur de la course verticale de la forme supérieure de bombage. La prise en charge de la feuille de verre supportée par la bande flexible peut ainsi être effectuée alors que la forme supérieure de bombage est à une faible hauteur au dessus de la bande flexible tendue - à condition bien sûr de disposer d'une puissance d'aspiration suffisante pour provoquer l'envol de la feuille de verre. Le caractère flexible de la bande transporteuse permet également de descendre la forme supérieure de bombage jusqu'à ce que sa partie centrale vienne toucher la feuille de verre ; le choc est alors immédiatement compensé par une légère déformation de la bande flexible qui garde toutefois un caractère essentiellement plan et n'entraîne pas de ce fait de déformations non désirées du verre. Dans les deux cas énoncés précédemment (qui s'adressent de préférence à la production de vitrages présentant une courbure peu prononcée) le formage du verre peut être obtenu essentiellement par effet de succion, la feuille de verre épousant les contours de la forme supérieure de bombage. Il peut être également complété par une déformation du verre par inertie et gravité lors de la prise en charge de la feuille de verre par le second dispositif de transfert avantageusement constitué par un cadre annulaire dont les contours correspondent à la forme que l'on désire conférer à la feuille de verre et qui peut également servir de cadre de trempe. Cette prise en charge peut en effet être effectuée très rapidement grâce au retrait rapide de la bande transporteuse dont le retour en position initiale libère l'espace situé sous la forme supérieure de bombage.

La course verticale de la forme supérieure de bombage peut être réglée également de manière telle que toute ou partie de la forme s'enfonce dans la bande transporteuse flexible qui joue alors concommitament le rôle d'une contre-forme de pressage. Ceci convient plus particulièrement à la production de vitrages présentant une courbure importante, notamment les vitrages de forme complexe.

Ce pressage contre la bande transporteuse flexible peut être poursuivi jusqu'à ce que la totalité de la face de dessous de la feuille de verre soit mise en contact avec la forme supérieure de bombage et obtient de cette manière directement sa forme définitive. Après le retrait de la bande transporteuse, la feuille de verre dont le bombage est ainsi achevé est déposée sur un cadre annulaire de même forme afin simplement de soutenir le verre, sans complément de formage.

Pour les formes de vitrages les plus difficiles, ce pressage contre la bande tranporteuse flexible ne constitue qu'un préformage et on opère un formage complémentaire par pressage, après que la bande flexible ait libéré l'espace sous la forme supérieure de bombage. On peut utiliser à titre de contre-forme femelle le cadre annulaire utilisé pour transporter les feuilles de verre vers la station de refroidissement ou mieux une contre-forme exclusivement réservée à cet effet, disposée fixe ou mobile sous le plan de transport des feuilles de verre, un cadre annulaire venant ensuite récupérer les feuilles de verre bombées à la forme définitive pour les conduire à la station de refroidissement et notamment de trempe.

L'invention a également pour objet un dispositif pour la mise en oeuvre du procédé de bombage défini ci-dessus. Ce dispositif comporte un four horizontal traversé par un convoyeur à rouleaux, une station de bombage - placée à la sortie du four - comprenant au moins une forme supérieure de bombage mobile verticalement, un premier dispositif pour le transfert des feuilles de verre entre le convoyeur du four et la station de bombage, une station de refroidissement notamment par trempe thermique et un second dispositif pour le transfert des feuilles de verre bombées vers le dispositif de refroidissement, ledit premier dispositif étant constitué par un tronçon d'une bande transporteuse flexible réalisée dans un matériau résistant à la chaleur, le bord avant dudit tronçon pouvant être déplacé de façon réversible entre une position d'attente située entre le convoyeur du four et la station de bombage et une position extrême avale située de l'autre côté de la station de bombage.

Le tronçon de bande flexible utilisé lors du transfert peut être déroulé - ou au contraire réenroulé - à partir d'un rouleau fixé sous le plan de transport des feuilles de verre, des dispositifs étant prévus pour contrôler la vitesse et la tension de la bande.

Selon une seconde forme de réalisation de l'invention, plus spécialement préférée, le tronçon de bande flexible est maintenu pendant tout le processus de transfert dans un état essentiellement plan en déplaçant son bord arrière sur la même distance que le bord avant. Cette disposition favorise une moindre usure de la bande transporteuse flexible et surtout permet un contrôle plus simple et plus efficace de la vitesse et la tension de la bande moyennant des organes de réglage appropriés.

D'autres détails et caractéristiques avantageuses de l'invention ressortent de la description faite ci-après en référence aux dessins annexés qui représentent :

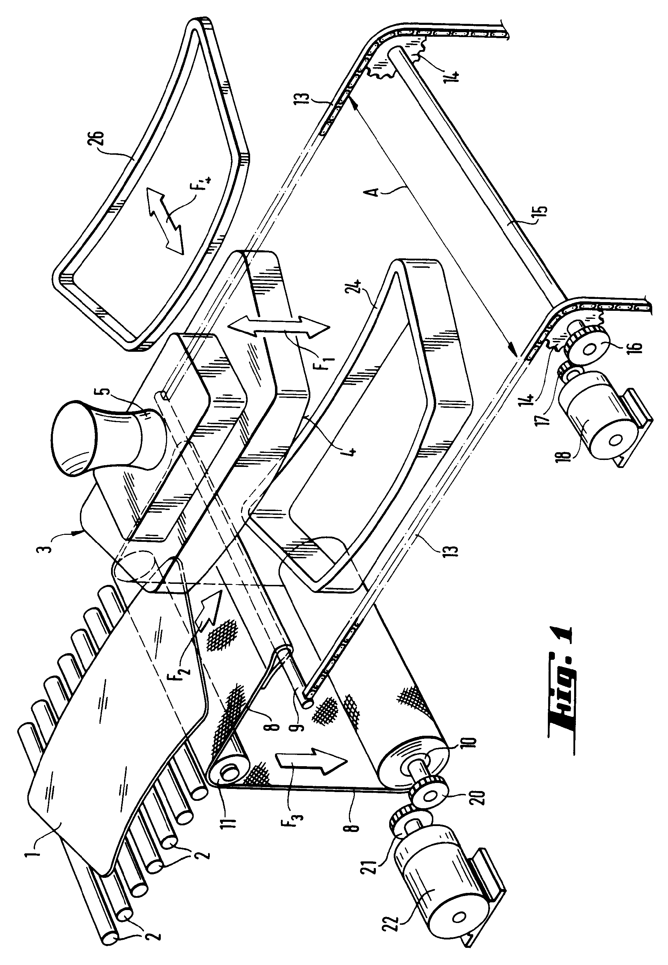

- figure 1 : un dispositif de bombage avec une bande flexible enroulée et déroulée sur un tambour,
- figure 2 : un dispositif de bombage avec une bande flexible maintenue pendant tout le processus de transfert dans un état essentiellement plan.

Sur les dessins, on n'a représenté que les éléments d'un dispositif de bombage les plus importants pour la réalisation de l'invention, vus de façon plus ou moins schématique. Il s'agit pour la plupart d'éléments usuels pour des machines de cet art.

A l'aide d'un convoyeur constitué par des rouleaux moteurs 2, les feuilles de verre 1 sont transportées au travers d'un four tunnel dans lequel elles sont chauffées à la température de bombage. la température de bombage. Le four débouche sur une station de bombage dans laquelle une forme de bombage supérieure (3) est posée au dessus du plan de transport des feuilles de verre, montée mobile verticalement (double flèche F1). La surface de bombage 4 venant en contact avec la feuille de verre 1 est convexe. La surface de bombage 4 est munie d'une pluralité de trous en connexion avec une chambre creuse pouvant être mise sous dépression grâce à un ventilateur 5. De cette manière, on réalise une forme aspirante à la surface de laquelle la feuille de verre peut être maintenue par aspiration.

Une bande transporteuse flexible 8 sert au transfert des feuilles de verre chaudes 1 entre les rouleaux 2 et la station de bombage afin de placer la feuille sous la forme de bombage 3. La bande 8 est constituée par un treillis ou un tissu réalisé dans un matériau résistant à la chaleur tel par exemple des fibres de verre ou du fil d'un métal résistant à la chaleur. La largeur de la bande 8 correspond à la longueur des rouleaux 2. Le bord avant de la bande 8 est fixé à une tige 9 ; le bord arrière est fixé à un tambour cylindrique 10 tournant autour de son axe longitudinal et disposé sous les rouleaux 2. Parallèlement au dernier rouleau 2, on dispose un tambour de renvoi 11, placé à une hauteur telle qu'après son passage par le tambour 11, la bande transporteuse soit située dans le prolongement du plan de transport horizontal défini par les rouleaux 2. Le tambour de renvoi 11 est monté en libre rotation.

Une chaîne 13 est fixée à chaque extrémité de la tige 9 tenant la bande 8. Les deux chaînes 13 engrènent sur des roues dentées 14 fixées à un même arbre 15. L'arbre 15 est disposé à l'arrière de la station de bombage vue dans la direction de déplacement des feuilles de verre. Des roues dentées 16, 17 lui transmettent le mouvement de rotation d'un moteur électrique 18. La distance A entre les chaînes 13 est choisie suffisamment grande pour laisser passer entre elles la forme de bombage supérieure animée d'un mouvement vertical (double flèche F1).

De même, le tambour 10 est commandé par des roues dentées 20, 21 entraînées en rotation par un moteur électrique 22. Les moteurs électriques 18 et 22 - et leurs commandes de pilotage - doivent être en mesure de conférer à la bande transporteuse une tension mécanique pouvant être présélectionnée et de la déplacer à l'instant prévu du processus de bombage en direction de la flèche F2 ou au contraire dans la direction de la flèche F3. La vitesse de la bande transporteuse 8 lors du transfert de la feuille de verre (mouvement F2) correspond à la vitesse communiquée par les rouleaux 2 ; du moins tant que la feuille de verre repose à la fois sur les rouleaux 2 et la bande 8, le déplacement du verre pouvant être si nécessaire plus lent dans la dernière phase de positionnement sous la forme de bombage. La vitesse retour (mouvement selon F3) est sensiblement plus grande que la vitesse aller.

Une contre-forme femelle 24 est disposée sous la forme de bombage 3. On peut utiliser une contre-forme pleine ou de préférence une contre-forme du type anneau ouvert en son centre. La contre-forme 24 est de préférence montée fixe mais peut aussi être équipée d'un dispositif de montée-baisse. Elle est placée sous la trajectoire de la bande transporteuse 8 et la tige 9.

A ces éléments essentiels du dispositif, il faut encore ajouter un cadre annulaire 26 disposé de manière usuelle sur un chariot ici non représenté se déplaçant dans la direction de la double flèche F4. Le cadre annulaire 26 a une taille et une forme correspondant aux contours des feuilles de verre bombées. Après avoir été bombée, la feuille de verre est conduite par ce cadre 26 dans une station de refroidissement attenante où elle est brutalement refroidie par de l'air projeté par des caissons de soufflage.

Naturellement, à la place d'une trempe, la feuille de verre peut être aussi plus ou moins lentement refroidie dans la station de refroidissement.

Selon un des modes de l'invention, le processus se déroule de la manière suivante : dès que le bord avant de la feuille de verre 1 s'approche de la bande transporteuse 8 sur le tambour de renvoi 11, le moteur 18 démarre et déplace la bande 8 à la vitesse de transport des feuilles de verre 1. De cette manière, la feuille de verre 1 est transférée par la bande 8 sur laquelle elle repose qui la conduit à la hauteur de la forme de bombage 3 sous laquelle elle est positionnée par des moyens connus. Après ce positionnement, la forme de bombage 3 est abaissée suffisamment bas pour que, grâce au fléchissement de la bande flexible 8, toute la surface de la feuille 1 soit amenée en contact avec la surface de bombage 4.

Pour obtenir la souplesse permettant le fléchissement nécessaire de la bande 8, les deux moteurs de la forme 3, 18 et 20 peuvent par exemple exercer sur l'arbre 15 - et respectivement sur le tambour 10 - un couple tel que la bande 8 soit maintenue à une tension mécanique donnée. Selon cette manière de procéder, surtout avantageuse pour des courbures assez faibles, la contreforme 24 n'est pas nécessaire.

Le ventilateur 5 est mis en route au moment où la forme de bombage 3 est abaissée en direction de la feuille de verre 1, de sorte que la feuille 1 est maintenue contre la forme 3 par l'effet de succion dû à la dépression. Lorsque la feuille de verre est appliquée en tout point de la surface de bombage 4, on relève la forme de bombage 3. La bande 8 est libérée et ramenée en position d'attente par le moteur 22. Le cadre 26 peut alors être conduit sous la forme de bombage 3 qui est abaissée jusqu'à celui-ci pour venir déposer la feuille de verre bombée sur le cadre 26.

Selon une autre façon de procéder, recommandée plus particulièrement pour les courbures les plus fortes et/ou complexes, le formage est complété par un pressage avec la contre-forme 24. Comme précédemment, la feuille de verre 1 est prise en charge par la forme de bombage aspirante 3 en opérant éventuellement un préformage par un pressage concommittent grâce à la bande flexible 8. Après cette prise en charge, on relève légèrement la forme de bombage 3 - et la feuille de verre 1 qui y reste attachée par effet de succion - et la bande 8 est ramenée en position d'attente du prochain vitrage. Dès que le champ est libre, la forme de bombage 3 est abaissée sur la contre-forme 24 et la feuille de verre est pressée selon sa forme définitive. On relève enfin la forme supérieure 3 retenant toujours la feuille de verre 1 qui est alors déposée sur le cadre 26 pour son refroidissement.

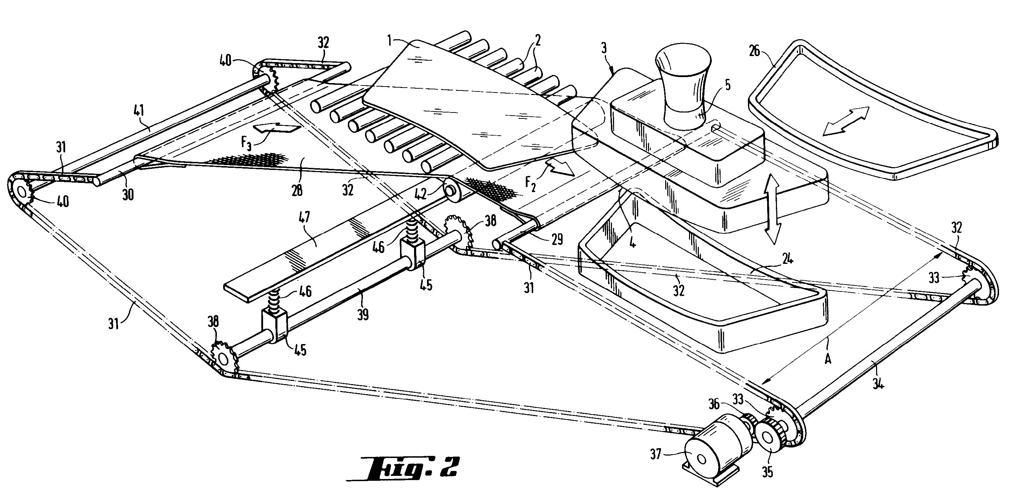

Les procédures opératoires expliquées ci-dessus sont également valables sur le fond avec le dispositif représenté à la figure 2 de sorte que la description qui suit peut être limitée au problème de la variante de réalisation du dispositif de transfert comportant la bande transporteuse 28. Cette bande 28 a la forme d'un tronçon de bande dont le bord avant est fixé à une première tige 29 et le bord arrière à une deuxième tige 30. La bande 28 est entraînée par deux chaînes 31, 32 qui relient les tiges 29 et 30 et maintiennent la bande à l'état tendu. La distance A entre les chaînes 31, 32 est à nouveau plus grande que la largeur des formes de bombage.

A l'arrière de la station de bombage vue du four, les chaînes 31, 32 passent sur des roues de renvoi 33 fixées à un arbre commun 34. L'arbre 34 est mis en rotation par des roues dentées 35 et 36 entraînées par un moteur électrique 37. Les chaînes 31 et 32 passent également par des roues de renvoi 38 inférieures - de même fixées à un arbre 39 - et des roues de renvoi 40 fixées à un arbre 41. L'arbre 41 et les roues 41 sont disposés sous les rouleaux 2, et plus précisément à un emplacement tel que l'angle que forme avec les rouleaux 2 la bande 28 en arrivant sur le rouleau de renvoi 42 soit relativement plat.

Le moteur 37 qui obéit à une commande de pilotage appropriée déplace la bande 28 aux moments voulus alternativement dans les directions données par les flèches F2 et F3.

La souplesse de la bande 28 nécessaire pour fléchissement lors de la prise en charge de la feuille 1 par la forme de bombage 3 peut être obtenue par le fait que les roues de renvoi 38 - ou plus précisément l'arbre 39 - soient montées de manière souple. Dans ce but, les paliers 45 portant l'arbre 39 sont suspendus par des ressorts idoines 45 à une butée fixe 47.

## Revendications

1. Procédé de bombage de feuilles de verre selon lequel la feuille de verre (1) est chargée à plat à l'extrémité d'un convoyeur (2) traversant un four tunnel, ressort par l'autre extrémité du convoyeur (2) après avoir atteint sa température de bombage, est convoyée par un premier dispositif de transfert (28) jusqu'à un ensemble de bombage qui comprend au moins une forme de bombage supérieure (3), est prise en charge par aspiration par la forme supérieure de bombage (3) qui est alors soulevée, et bombée suivant la forme souhaitée par l'ensemble de bombage puis est acheminée par un second dispositif de transfert (26) vers une station de refroidissement notamment de trempe thermique le transfert du four vers l'ensemble de bombage est obtenu par le déplacement réversible, parallèlement à la direction générale (F2) du déplacement de la feuille de verre (1), de l'extrémité avant d'une bande transporteuse flexible (8, 28) dont l'extrémité arrière est sous le plan de transport de la feuille de verre, la position initiale de l'extrémité avant de la bande (8, 28) étant située entre l'extrémité avale du convoyeur (2) et l'ensemble de bombage.

2. Procédé de bombage selon la revendication 1, **caractérisé en ce que** la prise en charge de la feuille de verre (1) par la forme supérieure de bombage (3) s'effectue concomitamment à un pressage de la feuille de verre entre la bande flexible (8, 28) et la forme supérieure de bombage (3).

3. Procédé de bombage selon l'une des revendications 1 à 2 **caractérisé en ce qu'**après le retrait de la bande transporteuse flexible (8, 28), on effectue un pressage de la feuille de verre entre la forme supérieure de bombage (3) et une contre-forme (24).

4. Dispositif pour la mise en oeuvre du procédé de bombage selon l'une des revendications 1 à 3, comportant un four horizontal traversé par un convoyeur à rouleaux (2), une station de bombage - placée à la sortie du four - comprenant au moins une forme supérieure de bombage (3) mobile verticalement, des moyens pour la prise en charge par aspiration des feuilles de verre par la forme supérieure de bombage, un premier dispositif pour le transfert des feuilles de verre entre le convoyeur (2) du four et la station de bombage, une station de refroidissement notamment par trempe thermique et un second dispositif (24) pour le transfert des feuilles de verre bombées vers le dispositif de refroidissement, **caractérisé en ce que** ledit premier dispositif est constitué par un tronçon d'une bande transporteuse flexible (8, 28) réalisée dans un matériau résistant à la chaleur, le bord avant (29) dudit tronçon pouvant être déplacé de façon réversible entre une position d'attente située entre le convoyeur (2) du four et la station de bombage et une position extrême avale située de l'autre côté de la station de bombage.

5. Dispositif selon la revendication 4 **caractérisé en ce que** sous le plan occupé par la bande transporteuse (8, 28) est prévue une contre-forme (24) susceptible de coopérer avec la forme de bombage (3).

6. Dispositif selon la revendication 4 ou 5, **caractérisé en ce que** le bord avant de la bande (8, 28) est fixé à une première tige (9, 29) déplacée par des chaînes (13, 31, 32) disposées à une distance A plus grande que la largeur de la forme de bombage (3).

7. Dispositif selon l'une des revendications 4 à 6 **caractérisé en ce que** la bande (8) est partiellement enroulée autour d'un tambour (10) et passe par un rouleau de renvoi (11) placé dans le prolongement du convoyeur à rouleaux (2).

8. Dispositif selon l'une ou plusieurs des revendications 4 à 7 **caractérisé en ce que** à l'aller (dans la direction F2), la bande transporteuse est entraînée par un moteur (18) selon une vitesse synchrone de la vitesse du convoyeur à rouleaux (2) et au retour (dans la direction F3) par un moteur (22), à plus grande vitesse.

9. Dispositif selon l'une ou plusieurs des revendications 4 à 8 **caractérisé en ce que** la bande transporteuse (8) élastique est montée de façon souple.

10. Dispositif selon la revendication 6 **caractérisé en ce que** la bande transporteuse (28) passe par un rouleau de renvoi (42) et est tendue par le rouleau de renvoi (42) et une deuxième tige (30).

11. Dispositif selon la revendication 10 **caractérisé** **en ce que** la première tige (29) et la deuxième tige (30) sont maintenues sous tension par des chaînes (31, 32) passant par des roues de renvoi (33, 38, 40) et sont mobiles alternativement entre leurs positions extrêmes.

12. Dispositif selon la revendication 11 **caractérisé en ce que** les chaînes (31, 32) sont déplacées dans les directions F2 et F3 par un moteur (37) de sorte que la vitesse de la bande, déplacée selon la direction F2, est synchronisée avec la vitesse du convoyeur à rouleaux (2) et est plus rapide selon la direction F3.

13. Dispositif selon l'une des revendications 10 à 12 **caractérisé en ce que** les roues de renvoi (38) sont suspendues à des ressorts (46).

14. Dispositif selon l'une des revendications 4 à 13 **caractérisé en ce que** la bande transporteuse (8, 28) est constituée d'un tissu ou treillis en fils d'un métal résistant à la chaleur.

15. Dispositif selon l'une des revendications 4 à 13 **caractérisé en ce que** la bande transporteuse (8, 28) est constituée d'un tissu en fibres de verre.

## Patentansprüche

1. Verfahren zum Biegen von Glasscheiben, bei dem die Glasscheibe (1) in horizontaler Lage auf das eine Ende eines einen Durchlaufofen durchquerenden Förderers (2) aufgelegt wird, nach Erreichen ihrer Biegetemperatur am anderen Ende des Förderers (2) aus dem Durchlaufofen austritt, durch eine erste Übergabevorrichtung (28) an eine wenigstens eine obere Biegeform (3) umfassende Biegevorrichtung übergeben, durch Ansaugen durch die obere Biegeform (3) von dieser ergriffen, die Biegeform anschließend angehoben und die Glasscheibe entsprechend der gewünschten Form durch die Biegevorrichtung gebogen und durch eine zweite Übergabevorrichtung (26) zu einer Kühlstation, insbesondere einer thermischen Vorspannstation verbracht wird, wobei die Übergabe vom Ofen zur Biegevorrichtung durch reversibles Verschieben parallel zur Hauptbewegungsrichtung (F2) der Glasscheibe (1) des vorderen Endes eines flexiblen Transportbandes (8,28) erfolgt, dessen hinteres Ende sich unter der Transportebene der Glasscheibe befindet, und die Ausgangsposition des vorderen Endes des Bandes (8,28) zwischen dem hinteren Ende des Förderers (2) und der Biegevorrichtung liegt.

2. Verfahren zum Biegen nach Anspruch 1, dadurch gekennzeichnet, daß die Übernahme der Glasscheibe (1) durch die obere Biegeform (3) gleichzeitig mit einem Pressen der Glasscheibe zwischen dem flexiblen Band (8,28) und der oberen Biegeform (3) erfolgt.

3. Verfahren zum Biegen nach Anspruch 1 oder 2, dadurch gekennzeichnet, daß nach dem Zurückziehen des flexiblen Transportbandes (8,28) ein Pressen der Glasscheibe zwischen der oberen Biegeform (3) und einer Gegen-Form (24) durchgeführt wird.

4. Vorrichtung zur Durchführung des Biegeverfahrens nach einem der Ansprüche 1 bis 3, mit einem von einem Rollenförderer (2) durchquerten Horizontalofen, einer am Ausgang des Ofens angeordneten Biegestation mit wenigstens einer vertikal beweglichen oberen Biegeform (3), Mitteln zum Aufnehmen der Glasscheiben durch die obere Biegeform durch Ansaugen, einer ersten Übergabevorrichtung für die Glasscheiben zwischen dem Förderer (2) des Ofens und der Biegestation, einer Kühlstation insbesondere durch thermisches Vorspannen, sowie einer zweiten Vorrichtung (24) für die Übergabe der gebogenen Glasscheiben an die Kühlvorrichtung, dadurch gekennzeichnet, daß die erste Vorrichtung aus einem Abschnitt eines flexiblen Transportbandes (8,28) aus einem hitzebeständigen Material besteht, dessen vordere Kante (29) in reversibler Weise zwischen einer Wartestellung zwischen dem Förderer (2) des Ofens und der Biegestation und einer Endstellung auf der anderen Seite der Biegestation verschiebbar ist.

5. Vorrichtung nach Anspruch 4, dadurch gekennzeichnet, daß unterhalb der von dem Transportband (8,28) eingenommenen Ebene eine Gegen-Form (24) vorgesehen ist, die mit der Biegeform (3) zusammenwirken kann.

6. Vorrichtung nach Anspruch 4 oder 5, dadurch gekennzeichnet, daß die vordere Kante des Bandes (8,28) an einer ersten Stange (9,29) befestigt ist, die durch Ketten (13,31,32) verschoben wird, die in einem Abstand voneinander angeordnet sind, der größer als die Breite der Biegeform (3) ist.

7. Vorrichtung nach einem der Ansprüche 4 bis 6, dadurch gekennzeichnet, daß das Band (8) teilweise auf einer Walze (10) aufgerollt ist und über eine in der Verlängerung des Rollenförderers (2) angeordnete Umlenkwalze (11) läuft.

8. Vorrichtung nach einem oder mehreren der Ansprüche 4 bis 7, dadurch gekennzeichnet, daß das Transportband auf dem Hinweg (in der Richtung F2) durch einen Motor (18) mit einer mit der Geschwindigkeit des Rollenförderers (2) synchronisierten Geschwindigkeit, und auf dem Rückweg (in der Richtung F3) durch einen Motor (22) mit größerer Geschwindigkeit angetrieben wird.

9. Vorrichtung nach einem oder mehreren der Ansprüche 4 bis 8, dadurch gekennzeichnet, daß das elastische Transportband (8) nachgiebig gelagert ist.

10. Vorrichtung nach Anspruch 6, dadurch gekennzeichnet, daß das Transportband (28) über eine Umlenkwalze (42) läuft und durch die Umlenkwalze (42) und eine zweite Stange (30) gespannt ist.

11. Vorrichtung nach Anspruch 10, dadurch gekennzeichnet, daß die erste Stange (29) und die zweite Stange (30) durch über Umlenkzahnräder (33,38,40) laufende Ketten (31,32) unter Spannung gehalten und abwechselnd zwischen ihren Endstellungen bewegbar sind.

12. Vorrichtung nach Anspruch 11, dadurch gekennzeichnet, daß die Ketten (31,32) derart in den Richtungen F2 und F3 durch einen Motor (37) angetrieben werden, daß die Geschwindigkeit des Bandes in der Richtung F2 mit der Geschwindigkeit des Rollenförderers (2) synchronisiert und in der Richtung F3 schneller ist.

13. Vorrichtung nach einem der Ansprüche 10 bis 12, dadurch gekennzeichnet, daß die Umlenkräder (38) an Federn (46) aufgehängt sind.

14. Vorrichtung nach einem der Ansprüche 4 bis 13, dadurch gekennzeichnet, daß das Transportband (8,28) aus einem Gewebe oder Gewirk aus hitzebeständigen Metallfasern besteht.

15. Vorrichtung nach einem der Ansprüche 4 bis 13, dadurch gekennzeichnet, daß das Transportband (8,28) aus einem Gewebe aus Glasfasern besteht.

## Claims

1. Method of bending glass sheets, according to which the glass sheet (1) is loaded flat onto the end of a conveyor (2) passing through a tunnel furnace, leaves from the other end of the conveyor (2) after having reached its bending temperature, is conveyed by a first transfer device (28) to a bending assembly which comprises at least one upper bending mould (3), is taken over by suction by the upper bending mould (3), which is then raised, and is bent to the desired shape by the bending assembly, then is moved by a second transfer device (26) to a cooling station, notably thermal toughening station, the transfer from the furnace to the bending assembly is achieved by the reversible displacement, parallel to the general direction (F2) of the displacement of the glass sheet (1), of the front end of a flexible conveyor belt (8, 28) of which the rear end is below the conveying plane of the glass sheet, the initial position of the front end of the belt (8, 28) being situated between the downstream end of the conveyor (2) and the bending assembly.

2. Bending method according to Claim 1, characterized in that the taking over of the glass sheet (1) by the upper bending mould (3) takes place concomitantly with a pressing of the glass sheet between the flexible belt (8, 28) and the upper bending mould (3).

3. Bending method according to one of Claims 1 to 2, characterized in that, after withdrawal of the flexible conveyor belt (8, 28), a pressing of the glass sheet is performed between the upper bending mould (3) and a counter-mould (24).

4. Device for carrying out the bending method according to one of Claims 1 to 3, comprising a horizontal furnace traversed by a roller conveyor (2), a bending station - situated at the outlet from the furnace - comprising at least one vertically movable upper bending mould (3), means for taking over by suction of the glass sheets by the upper bending mould, a first device for the transfer of the glass sheets between the conveyor (2) of the furnace and the bending station, a cooling station, notably by thermal toughening, and a second device (24) for the transfer of the bent glass sheets to the cooling device, characterized in that said first device is constituted of a length of a flexible conveyor belt (8, 28) made of a heat-resistant material, the front edge (29) of said belt length being able to be displaced in reversible manner between a waiting position situated between the conveyor (2) of the furnace and the bending station and an extreme downstream position situated on the other side of the bending station.

5. Device according to Claim 4, characterized in that, below the plane occupied by the conveyor belt (8, 28), a counter-mould (24) is provided, capable of cooperating with the bending mould (3).

6. Device according to Claim 4 or 5, characterized in that the front edge of the conveyor belt (8, 28) is fixed to a first rod (9, 29) displaced by chains (13, 31, 32) disposed at a distance apart A greater than the width of the bending mould (3).

7. Device according to one of Claims 4 to 6, characterized in that the belt (8) is partially rolled around a drum (10) and passes around a return roller (11) situated in the continuation of the roller conveyor (2).

8. Device according to one or more of Claims 4 to 7, characterized in that when moving forwards (in the direction F2) the conveyor belt is driven by a motor (18) at a speed synchronous with the speed of the roller conveyor (2) and when returning (in the direction F3) by a motor (22) at a higher speed.

9. Device according to one or more of Claims 4 to 8, characterized in that the elastic conveyor belt (8) is flexibly mounted.

10. Device according to Claim 6, characterized in that the conveyor belt (28) passes around a return roller (42) and is tensioned by the return roller (42) and a second rod (30).

11. Device according to Claim 10, characterized in that the first rod (29) and the second rod (30) are held under tension by chains (31, 32) passing around return wheels (33, 38, 40) and are movable alternately between their extreme positions.

12. Device according to Claim 11, characterized in that the chains (31, 32) are displaced in the directions F2 and F3 by a motor (37) in such a manner that the speed of the belt, when moving in direction F2, is synchronized with the speed of the roller conveyor (2) and, when moving in direction F3, is more rapid.

13. Device according to one of Claims 10 to 12, characterized in that the return wheels (38) are suspended from springs (46).

14. Device according to one of Claims 4 to 13, characterized in that the conveyor belt (8, 28) is made of a fabric or network of threads of a heat-resistant metal.

15. Device according to one of Claims 4 to 13, characterized in that the conveyor belt (8, 28) is made of a fabric of glass fibres.
